# EUROPEAN PATENT SPECIFICATION

(11) **EP 2 612 771 B1**
(45) Date of publication and mention of the grant of the patent: **14.11.2018**
(21) Application number: 11821264.6
(22) Date of filing: 12.08.2011
(51) Int. Cl.: B60C 13/00

(54) **PNEUMATIC TIRE**
LUFTREIFEN
PNEUMATIQUE

(30) Priority: 31.08.2010 JP 2010193933
(43) Date of publication of application: 10.07.2013
(73) Proprietor: Bridgestone Corporation, Tokyo 104-8340 (JP)
(72) Inventor: NAKAMURA, Takamitsu, Kodaira-shi Tokyo 187-8531 (JP)
(74) Representative: Lamb, Martin John Carstairs
(86) International application number: PCT/JP2011/004575
(87) International publication number: WO 2012/029239

(56) References cited:
- EP-A2- 0 950 548
- JP-A- H1 120 416
- JP-A- 11 321 241
- JP-A- 63 106 109
- JP-A- S63 106 108
- JP-A- 2003 191 719
- JP-A- 2005 125 937
- JP-A- 2007 045 328
- JP-A- 2008 001 353
- JP-A- 2008 189 165
- JP-A- 2010 064 656
- JP-A- 2010 137 604
- JP-A- 2010 137 604
- JP-A- 2010 179 830

## Description

### TECHNICAL FIELD

The present invention relates to pneumatic tires provided with an annular decoration band formed from a plurality of ridges, and a mark constituted by predetermined characters, symbols or designs, on the outer surface of a tire side portion.

### BACKGROUND ART

Normally, a tire is provided with an annular decoration band extending in the circumferential direction of the tire and one or more marks on the outer surface of a tire side portion. The marks are constituted by predetermined characters, symbols or designs indicating a company or product name, size, country of manufacture, or the like. In addition to serving as decoration for the tire, prominent marks also help to distinguish the tire from other tires. Since the space for providing such a decoration band and marks is limited, a number of approaches have been taken in order to accentuate the decoration band and the marks even in a narrow space. As disclosed in Patent Literature 1, one such approach is to provide the marks within a decoration band formed from two regions with different ridge densities arranged alternately in the circumferential direction of the tire. Subtle changes in reflected light due to the difference in ridge densities accentuate the marks within the decoration band. Attention is also drawn to the disclosures of JP2008-001353A, JP2010-179830A, JP2005-125937A, JP2010-137604A, JP2008-189165A, EP0950548A2, JPS63-106108A and JPH11-20416.

### CITATION LIST

### Patent Literature

PTL 1: JP9002028A

### SUMMARY OF INVENTION

### (Technical Problem)

The decoration band as described above is formed by processing the necessary ridges by a vulcanization mold. So as not to detract from the visibility of the marks, however, the marks need to be at least a predetermined size, thus leading to an increase in the width of the decoration band and a consequent increase in the cost for processing by vulcanization mold. On the other hand, in a typical tire the carcass turns back, from the inside towards the outside in the direction of tire width, around the bead core, and the turn back end of the carcass is positioned along the tire side portion. A problem occurs in that on either side of the turn back end in the tire radial direction, an unevenness easily forms on the tire side portion, detracting from the appearance of the tire. Furthermore, in recent years, the rubber gauge of the tire side portion has tended to become thinner in order to decrease the weight of the tire, which increases the prominence of the unevenness. A strong desire therefore exists for tire improvements that address this problem.

It is an object of the present invention to provide a pneumatic tire comprising an annular decoration band, formed from a plurality of ridges, and one or more marks constituted by predetermined characters, symbols, or designs on the outer surface of the tire side portion, wherein high visibility of the marks is maintained without detracting from the appearance of the tire, while the manufacturing costs of the vulcanization mold are reduced.

### (Solution to Problem)

The present invention provides a pneumatic tire comprising an annular decoration band formed from a plurality of ridges, and one or more marks constituted by a predetermined character, symbol or design, on an outer surface of a tire side portion, wherein: the decoration band is disposed to extend both inward and outward in a tire radial direction from a position corresponding to a turn back end of a carcass; a width of the decoration band is narrower than a maximum length of the marks in the tire radial direction; the marks are disposed to overlap the decoration band and to protrude beyond the decoration band either inward or outward in the tire radial direction from a position of overlap with the decoration band; and in a region of overlap with the decoration band, an edge of the marks inward or outward in the tire radial direction is positioned in a central region of the decoration band.

Note that here, the central region of the decoration band refers to a region centered on the middle of the decoration band in the direction of width thereof, extending both inward and outward in the tire radial direction, and occupying approximately 95%, or preferably approximately 80%, of the width of the decoration band.

The marks are preferably disposed to extend outward in the tire radial direction.

In a region of overlap with the decoration band, the marks are pushed further axially outwards from an outer surface than the ridges in the decoration band.

The marks are furthermore preferably bordered by protrusions, and mark-internal ridges are preferably provided within a region surrounded by the protrusions.

The ridges in the decoration band are slanted at an angle in a range from 30° to 60° with respect to a meridional line of the tire.
The marks are preferably disposed so that the inner edge in the tire radial direction or the outer edge in the tire radial direction is in alignment with a position corresponding to the turn back end of the carcass along the tire side portion.

### (Advantageous Effect of Invention)

According to the present invention, an annular decoration band and one or more marks are provided on the outer surface of the tire side portion, and the decoration band is disposed to extend both inward and outward in the tire radial direction from a position corresponding to the turn back end of the carcass, with the width of the decoration band being narrower than a maximum length of the marks in the tire radial direction, and the marks being disposed to overlap the decoration band. As a result, the decoration band is made sufficiently narrow, while making the unevenness on the tire side portion near the turn back end of the carcass less prominent without the need to provide a high density of ridges in the decoration band or to form the ridges in a complex pattern. Accordingly, the processing costs for the vulcanization mold to form the decoration band can be sufficiently reduced, while also yielding a lower tire weight resulting from the reduction in the number of ridges. Furthermore, the appearance of the manufactured tire is effectively prevented from being marred. Moreover, disposing the marks to protrude beyond the decoration band either inward or outward in the tire radial direction allows for the marks to be disposed to overlap both a portion that does and a portion that does not include the decoration band. The difference between the marks and the background is thus accentuated, allowing for a great increase in visibility. Hence, the manufacturing costs of the vulcanization mold can be reduced without detracting from the appearance of the tire, while also improving the visibility of the marks.

In a region of overlap between the marks and the decoration band in this tire, when an edge of the marks inward or outward in the tire radial direction is positioned in a central region of the decoration band, the edge of the marks inward or outward in the tire radial direction is not seen in overlap with boundary lines of the decoration band. Accordingly, this tire presents no risk of detracting from the visibility of the marks.

Furthermore, disposing the marks to extend outward in the tire radial direction provides room in terms of length in the circumferential direction of the tire, thus allowing for larger sized marks, which in turn yields a further substantial increase in visibility.

In the region of overlap between the marks and the decoration band, pushing the marks further outwards from the outer surface of the tire than the ridges in the decoration band also further accentuates the marks.

Accordingly, this tire even further improves the visibility of the marks.

Furthermore, when the marks are bordered by protrusions, and mark-internal ridges are provided within a region surrounded by the protrusions, the marks are accentuated to an even greater degree.

Accordingly, this tire achieves an even further enhanced visibility of the marks.

When the ridges in the decoration band are slanted at an angle in a range from 30° to 60° with respect to a meridional line of the tire, then despite the rigid step occurring in the tire radial direction on either side of the turn back end of the carcass, the unevenness on the tire side portion occurring near the position corresponding to the turn back end can be made less conspicuous.

### BRIEF DESCRIPTION OF DRAWINGS

The present invention will be further described below with reference to the accompanying drawings, wherein:
FIG. 1 is a partial side view and a partial enlarged view of an embodiment of a pneumatic tire according to the present invention;
FIG. 2 is a cross-sectional diagram showing half of the tire in FIG. 1 along a meridional line thereof;
FIG. 3 is a partial side view of another embodiment of a pneumatic tire according to the present invention; and
FIG. 4 is an enlarged view of the principal portion of FIG. 2, showing the region in which the decoration band and the marks are disposed.

### DESCRIPTION OF EMBODIMENTS

The following describes embodiments of the present invention with reference to the drawings.

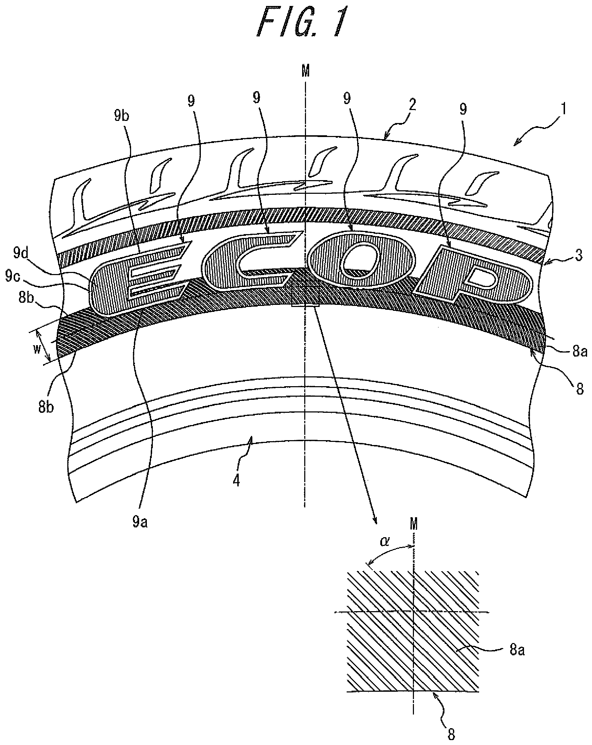

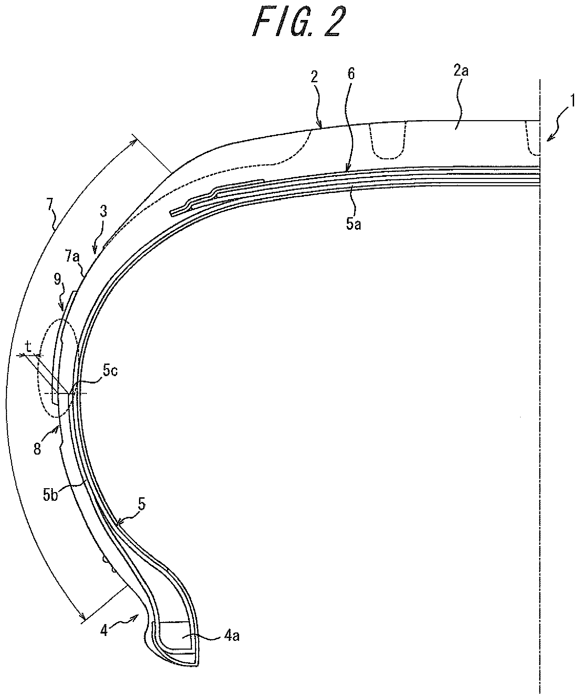

In FIGS. 1 and 2, reference numeral 1 denotes a product tire labeled 1. The tire 1 is provided with a tread portion 2, a pair of sidewalls 3, a pair of bead portions 4, a carcass 5 composed of at least one ply cord layer extending toroidally between the pair of bead portions 4, and a belt 6 disposed between a crown region 5a of the carcass 5 and tread rubber 2a. A lateral portion 5b of the carcass 5 turns back, from the inside towards the outside in the direction of tire width, around a bead core 4a located in the bead portion 4, and a turn back end 5c is positioned along a tire side portion 7. Here, the tire side portion 7 refers to a range from an outer edge of the tread portion 2 in the direction of tire width to a section of the bead portion 4 that engages with the rim. Furthermore, as shown in FIG. 1, a rubber gauge t of the tire side portion 7 at the turn back end 5c (the thickness of rubber from the ply cord to the outer surface of the tire side portion 7) is approximately between 1.5 mm and 3.0 mm.

As shown in FIG. 1, an annular decoration band 8 is formed on an outer surface 7a of the tire side portion 7 by a plurality of ridges 8a provided along the circumferential direction of the tire. These ridges 8a may extend in a straight line either parallel to or at a predetermined angle α with respect to a meridional line M of the tire, or the ridges 8a may form curves or the like with a predetermined curvature.

One or more marks 9, constituted by predetermined characters, symbols, or designs, are also disposed on the outer surface 7a.

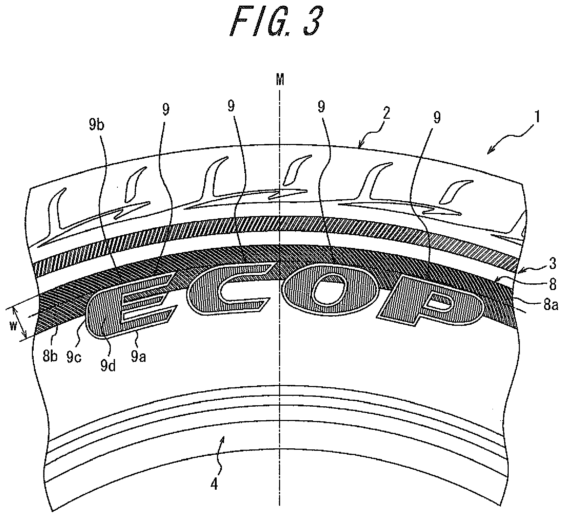

These marks 9 are disposed either to protrude outward, as shown in FIG. 1, or inward, as shown in FIG. 3, in the tire radial direction from a position of overlap with the decoration band 8.

As shown in FIG. 2, taking a position corresponding to the turn back end 5c of the carcass as a reference, the decoration band 8 is disposed to extend both inward and outward in the tire radial direction from the position corresponding to the turn back end 5c. The width w of the decoration band 8 in the radial direction as shown in FIG. 1 is narrower in the tire radial direction than the length of the longest of the marks 9 that are in overlap with the decoration band 8. As a result, the unevenness occurring on the outer surface 7a near a position corresponding to the turn back end 5c can be made less conspicuous by the decoration band 8 even if the rubber gauge is made thin to a certain degree. Furthermore, the width w of the decoration band 8 can be reduced to the minimum necessary width. Note that the width w of the decoration band 8 may be approximately between 4 mm and 20 mm.

As shown in FIGS. 1 and 3, the marks 9 are disposed to overlap both a portion that does and a portion that does not include the decoration band 8. Since both portions that have and that lack the decoration band 8 serve as the background for the marks 9, the difference between the marks and the background is accentuated, thereby greatly increasing visibility.

In particular, disposing the marks 9 to extend outward in the tire radial direction from the decoration band 8, as shown in FIG. 1, provides room between adjacent marks 9 when a plurality of marks 9 are disposed in the circumferential direction of the tire, thus allowing for larger sized marks 9, which in turn yields a further substantial increase in visibility of the marks 9.

In the region of overlap between the marks 9 and the decoration band 8, by positioning an inner edge 9a in the tire radial direction as shown in FIG. 1, or an outer edge 9b in the tire radial direction as shown in FIG. 3, in a central region of the decoration band 8, the inner edge 9a in the tire radial direction or the outer edge 9b in the tire radial direction of the marks 9 is not seen in overlap with boundary lines 8b of the decoration band 8 located inward and outward in the radial direction.

By disposing the marks 9 so that the inner edge 9a in the tire radial direction as shown in FIG. 1, or the outer edge 9b in the tire radial direction as shown in FIG. 3, is in alignment with a position corresponding to the turn back end 5c of the carcass 5 along the tire side portion, the unevenness occurring on the outer surface 7a near the position corresponding to the turn back end 5c is made even less conspicuous.

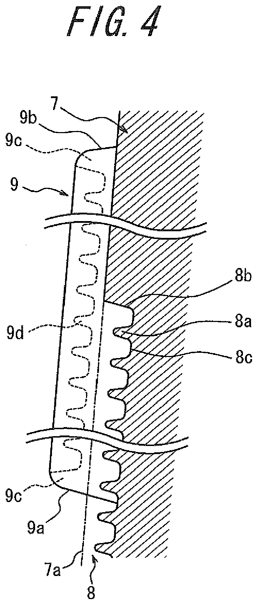

Moreover, in the region of overlap between the marks 9 and the decoration band 8, pushing the marks 9 further outwards from the outer surface of the tire than the ridges 8a in the decoration band 8, as shown in FIG. 4, yields a step in the direction of tire width between the marks 9 and the decoration band 8, thus allowing for further accentuation of the boundary between the decoration band 8 and marks 9.

Furthermore, when the marks 9 are bordered by protrusions 9c, and mark-internal ridges 9d are provided within a region surrounded by the protrusions 9c, the marks 9 are accentuated to an even greater degree. Here, pushing the protrusions 9c further outwards from the outer surface of the tire than the mark-internal ridges 9d allows the protrusions 9c effectively to prevent damage or the like to the mark-internal ridges 9d.

Note that as shown by the detailed view of the decoration band 8 in FIG. 4, when a concavity 8c that is recessed inwards in the tire width direction is provided along the outer surface 7a, and the ridges 8a are caused to project from the bottom of the concavity 8c to a projection height that is lower than the outer surface 7a, then even when an area around the decoration band 8 scrapes against a curb or the like while the tire is in use, the ridges 8a are effectively protected.

Here, it is preferable that the ridges 8a be inclined with respect to the meridional line of the tire at an angle α between 30° and 60°. Here, on either side of the turn back end 5c of the carcass 5 in the tire radial direction, the presence of a rigid step is unavoidable. The turn back end 5c extends in the circumferential direction of the tire, and if the angle α is too small, the direction in which the ridges 8a extend approaches the direction in which the turn back end 5c extends, leading to the risk of cracks easily occurring in the ridges 8a. On the other hand, if the angle α is too large, the direction in which the ridges 8a extend becomes nearly orthogonal to the direction in which the turn back end 5c extends, leading to the concern that the ridges 8a may not sufficiently achieve the effect of making the unevenness occurring on the tire side portion near the position corresponding to the turn back end 5c less conspicuous. Restricting the direction in which the ridges 8a extend to the above range both sufficiently strengthens the tire while effectively making the unevenness due to the existence of the turn back end 5c less conspicuous.

### (Examples)

As described below, prototypes of adjusted tires 1-4 according to the present invention and of a reference tire serving as a conventional example were produced, and the visibility of the marks on the tires was examined by visually confirming the marks. Table 1 shows the results of such examination. Note that visibility is an index indicating the results of examining each tire, treating the results of examining the reference tire, i.e. the conventional example, as a control. A larger index indicates superior visibility.

The adjusted tire 1 is a 215/60R16 size tire provided with a decoration band and marks. The decoration band (having a width of 16 mm) is centered on a position of the tire side portion corresponding to the turned back end of the carcass and extends 8 mm respectively inward and outward in the tire radial direction. The marks are 20 mm long in the tire radial direction and are disposed at a position such that the inner edge of the marks in the radial direction matches the inward boundary line of the decoration band in the circumferential direction of the tire. Note that the decoration band is provided with ridges at 1.0 mm intervals in a concavity recessed 0.4 mm inwards in the tire width direction from the outer surface of the tire side portion. The marks are formed flush with the concavity in the decoration band (ridges not being provided within the marks).

The adjusted tire 2 is equivalent to the adjusted tire 1, except that the marks are disposed so that the inner edge thereof in the radial direction is positioned in the center of the decoration band.

The adjusted tire 3 is equivalent to the adjusted tire 2, except that the marks are caused to project from the outer surface of the tire side portion outward in the tire radial direction by 0.4 mm.

Furthermore, the adjusted tire 4 is equivalent to the adjusted tire 3, except that the inside of the marks is depressed, with protrusions bordering the marks, and mark-internal ridges being formed at 0.8 mm intervals.

The reference tire is equivalent to the adjusted tire 1, except that the width of the decoration band is 29 mm, and the marks are disposed within the decoration band.

**Table 1**

| | Reference Tire | Adjusted Tire 1 | Adjusted Tire 2 | Adjusted Tire 3 | Adjusted Tire 4 |
|---|---|---|---|---|---|
| Visibility of Marks | 100 | 100 | 102 | 102 | 105 |

These results clearly show that visibility at least equivalent to that of a conventional tire can be guaranteed even when the width of the decoration band is narrower than the maximum length of the marks in the tire radial direction, and the marks are disposed to protrude beyond the decoration band in the tire radial direction from a position of overlap with the decoration band (adjusted tires 1-4).

### REFERENCE SIGNS LIST

- 1:: Product tire
- 2:: Tread portion
- 3:: Sidewall
- 4:: Bead portion
- 4a:: Bead core
- 5:: Carcass
- 5c:: Turn back end of carcass
- 6:: Belt
- 7:: Tire side portion
- 7a:: Outer surface of tire side portion
- 8:: Decoration band
- 8a:: Ridge
- 8b:: Boundary line
- 8c:: Concavity
- 9:: Mark
- 9a:: Inner edge of mark in tire radial direction
- 9b:: Outer edge of mark in tire radial direction
- 9c:: Protrusion
- 9d:: Mark-internal ridge

## Claims

1. A pneumatic tire (1) comprising an annular decoration band (8) formed from a plurality of ridges (8a), and one or more marks (9) constituted by a predetermined character, symbol or design, on an outer surface (7a) of a tire side portion (7), wherein:
the decoration band (8) is disposed to extend both inward and outward in a tire radial direction from a position corresponding to a turn back end (5c) of a carcass (5); a width w of the decoration band (8) is narrower than a maximum length of the marks (9) in the tire radial direction; the marks (9) are disposed to overlap the decoration band (8) and to protrude beyond the decoration band (8) either inward or outward in the tire radial direction from a position of overlap with the decoration band (8); in a region of overlap with the decoration band (8), an edge (9a, 9b) of the marks (9) inward or outward in the tire radial direction is positioned in a central region of the decoration band (8) and the marks (9) are pushed further axially outwards from an outer surface (7a) than the ridges (8a) in the decoration band (8); and the ridges (8a) in the decoration band (8) are slanted at an angle α in a range from 30° to 60° with respect to a meridional line M of the tire (1).

2. The pneumatic tire of claim 1, wherein the marks (9) are disposed to extend outward in the tire radial direction.

3. The pneumatic tire of either claim 1 or claim 2, wherein the marks (9) are bordered by protrusions (9c), and mark-internal ridges (9d) are provided within a region surrounded by the protrusions (9c).

4. The pneumatic tire of any one of claims 1 through 3, wherein the marks (9) are disposed so that the inner edge (9a) in the tire radial direction or the outer edge (9b) in the tire radial direction is in alignment with a position corresponding to the turn back end (5c) of the carcass (5) along the tire side portion (7).

## Patentansprüche

1. Luftreifen (1), beinhaltend ein ringförmiges Zierband (8), welches aus einer Vielzahl von Stegen (8a) gebildet ist, und eine oder mehrere Markierung(en) (9), gebildet aus einem vorbestimmten Buchstaben, Symbol oder Zeichen, an einer äußeren Oberfläche (7a) eines Reifenseitenabschnitts (7), wobei:
das Zierband (8) so angeordnet ist, dass es sich gleichermaßen einwärts und auswärts in einer Reifenradialrichtung von einer Position erstreckt, welche einem Umkehrende (5c) einer Karkasse (5) entspricht; wobei eine Breite w des Zierbandes (8) schmaler ist als eine maximale Länge der Markierungen (9) in der Reifenradialrichtung; wobei die Markierungen (9) angeordnet sind, um das Zierband (8) zu überlappen und über das Zierband (8) hinaus entweder einwärts oder auswärts in der Reifenradialrichtung von einer Überlappungsposition mit dem Zierband (8) vorzuspringen; wobei in einem Überlappungsbereich mit dem Zierband (8) eine Kante (9a, 9b) der Markierungen (9) einwärts oder auswärts in der Reifenradialrichtung in einem mittleren Bereich des Zierbandes (8) positioniert ist, und die Markierungen (9) weiter in axialer Richtung auswärts von einer Oberfläche (7a) weg geschoben sind, welche weiter auswärts liegt als die Stege (8a) im Zierband (8); und wobei die Stege (8a) in dem Zierband (8) schräg in einem Winkel α angeordnet sind, welcher in einem Bereich von 30° bis 60° in Bezug auf eine meridionale Linie M des Reifens (1) liegt.

2. Luftreifen nach Anspruch 1, bei welchem die Markierungen (9) so angeordnet sind, dass sie sich auswärts in die Reifenradialrichtung erstrecken.

3. Luftreifen nach einem der beiden Ansprüche 1 oder 2, bei welchem die Markierungen (9) durch Vorsprünge (9c) eingefasst sind, und innerhalb der Markierungen liegende Stege (9d) innerhalb eines Bereichs bereitgestellt sind, welcher durch die Vorsprünge (9c) umgeben ist.

4. Luftreifen nach einem der Ansprüche 1 bis 3, bei welchem die Markierungen (9) so angeordnet sind, dass die innere Kante (9a) in der Reifenradialrichtung oder die äußere Kante (9b) in der Reifenradialrichtung mit einer Position fluchtet, welche dem Umkehrende (5c) der Karkasse (5) entlang des Reifenseitenabschnitts (7) entspricht.

## Revendications

1. Pneumatique (1) comprenant une bande décorative annulaire (8) formée à partir d'une pluralité d'arêtes (8a), et un ou plusieurs emblèmes (9) constitués par un caractère, un symbole ou un modèle prédéterminé, sur une surface externe (7a) d'une portion latérale de pneu (7), dans lequel :
la bande décorative (8) est disposée pour s'étendre à la fois vers l'intérieur et vers l'extérieur dans une direction radiale de pneu à partir d'une position correspondant à une extrémité de revers (5c) d'une carcasse (5) ; une largeur w de la bande décorative (8) est plus étroite qu'une longueur maximale des emblèmes (9) dans la direction radiale de pneu ; les emblèmes (9) sont disposés pour chevaucher la bande décorative (8) et pour faire saillie au-delà de la bande décorative (8) soit vers l'intérieur soit vers l'extérieur dans la direction radiale de pneu à partir d'une position de chevauchement avec la bande décorative (8) ; dans une région de chevauchement avec la bande décorative (8), un bord (9a, 9b) des emblèmes (9) vers l'intérieur ou vers l'extérieur dans la direction radiale est positionné dans une région centrale de la bande décorative (8) et les emblèmes (9) sont poussés davantage dans le sens axial vers l'extérieur à partir d'une surface externe (7a) que les arêtes (8a) dans la bande décorative (8) ; et les arêtes (8a) dans la bande décorative (8) sont inclinées selon un angle α dans une plage de 30° à 60° par rapport à un axe méridional M du pneu (1).

2. Pneumatique selon la revendication 1, dans lequel les emblèmes (9) sont disposés pour s'étendre vers l'extérieur dans la direction radiale de pneu.

3. Pneumatique selon soit la revendication 1 soit la revendication 2, dans lequel les emblèmes (9) sont bordés par des saillies (9c), et des arêtes internes aux emblèmes (9d) sont prévues au sein d'une région entourée par les saillies (9c).

4. Pneumatique selon l'une quelconque des revendications 1 à 3, dans lequel les emblèmes (9) sont disposés de sorte que le bord interne (9a) dans la direction radiale de pneu ou le bord externe (9b) dans la direction radiale de pneu est en alignement avec une position correspondant à l'extrémité de revers (5c) de la carcasse (5) le long de la portion latérale de pneu (7).
